# FASCICULE DE BREVET EUROPEEN

(11) **EP 2 232 832 B1**
(45) Date de publication et mention de la délivrance du brevet: **12.02.2014**
(21) Numéro de dépôt: 08866141.8
(22) Date de dépôt: 19.12.2008
(51) Int. Cl.: H04M 1/247, H04M 3/42, H04M 1/253

(54) **PROCEDE DE COMMUNICATION ENTRE UN SERVEUR DE COMMUNICATION ET UN TERMINAL**
KOMMUNIKATIONSVERFAHREN ZWISCHEN EINEM KOMMUNIKATIONSSERVER UND EINEM ENDGERÄT
METHOD OF COMMUNICATION BETWEEN A COMMUNICATION SERVER AND A TERMINAL

(30) Priorité: 21.12.2007 FR 0760254
(43) Date de publication de la demande: 29.09.2010
(73) Titulaire: Alcatel Lucent, 75007 Paris (FR)
(72) Inventeur: OLIVIER, François, F-75008 Paris (FR); REY, Jean-François, F-75008 Paris (FR)
(74) Mandataire: Sciaux, Edmond
(86) Numéro de dépôt international: PCT/EP2008/068116
(87) Numéro de publication internationale: WO 2009/083515

(56) Documents cités:
- US-A- 6 064 732
- US-A1- 2003 103 602
- BURGER CANTATA TECHNOLOGY E ET AL: "A Session Initiation Protocol (SIP) Event Package for Key Press Stimulus (KPML); rfc4730.txt" STANDARD, INTERNET ENGINEERING TASK FORCE, IETF, CH, 1 novembre 2006 (2006-11-01), XP015048699 ISSN: 0000-0003

## Description

L'invention concerne : un procédé de communication entre un serveur de communication, et un terminal, pour la mise en oeuvre de ce procédé.

L'utilisateur d'un terminal téléphonique a besoin d'envoyer des commandes à un serveur de communication pour bénéficier de certains services plus évolués que le simple établissement de communications téléphoniques. Dans un réseau téléphonique analogique, il est connu d'envoyer des commandes à un autocommutateur en pressant, sur le clavier d'un terminal téléphonique, une touche ou bien une suite de touches (0 à 9, R, #, *, A, B, C, D). Par exemple : l'utilisateur presse la touche 3 pour passer en conférence, 4 pour demander un rappel automatique, etc. Ces chiffres sont traduits chacun par une double tonalité transmise dans la bande des fréquences vocales (Procédé connu sous le nom de DTMF : Dual Tone Multifrequency).

Dans les réseaux téléphoniques numériques, à multiplexage temporel, pour les entreprises, on connaît des terminaux téléphoniques comportant des touches spécifiques pour des fonctions fixées, mais aussi des touches dites à fonction évolutive, proposant à l'utilisateur des actions différentes contextuelles selon les événements se produisant au cours d'une communication téléphonique. Ces touches à fonction évolutive sont placées en bordure d'un écran. Un mot, une abréviation de mot, ou une icône, est affiché sur cet écran à proximité de chaque touche ayant une fonction évolutive, de façon à indiquer à l'utilisateur la fonction courante de cette touche. L'attribution des fonctions évolutives et l'affichage des indications associées aux touches sont entièrement gérés de manière centralisée, par l'autocommutateur.

L'évolution de la technologie a conduit à acheminer des signaux téléphoniques de voix et de signalisation sous la forme de paquets de données, en utilisant la famille de protocoles Internet (IP), notamment le protocole RTP (Real Time Transfer Protocol) pour les paquets de voix et le protocole SIP (Session Initiation Protocol) pour les paquets de signalisation. Dans un tel réseau de type IP/SIP, il est connu d'envoyer des commandes à un serveur de communication en pressant, sur le clavier d'un terminal téléphonique de type SIP, une touche correspondant à un chiffre ou bien une suite de touches correspondant à une suite donnée de chiffres. Le document IETF RFC 4730 décrit un procédé appelé KPML (Key Press Markup Language) qui permet de définir et d'exploiter ces suites de chiffres pour commander un serveur de communication utilisant le protocole de signalisation SIP.

Ce procédé connu KPML utilise des requêtes du protocole de signalisation SIP, appelées SUBSCRIBE et NOTIFY, pour échanger des messages entre un serveur de communication et un terminal de type SIP lors de l'établissement de chaque communication. En utilisant ces messages KPML, le serveur indique au terminal un ensemble de commandes DTMF prédéterminées et associées à une communication donnée, que ce serveur est capable de recevoir et d'interpréter. Chaque commande DTMF est constitué d'un appui sur une touche donnée, ou une suite d'appuis sur plusieurs touches données (parmi les touches 0 à 9, R, #, *, A, B, C, D).

Si l'utilisateur appuie sur une ou plusieurs touches correspondant à une de ces commandes prédéterminées, le terminal doit détecter cette commande, et la signaler au serveur. Le terminal utilise des messages KPML pour lui signaler cet appui (ou cette suite d'appuis sur les touches données). Le terminal peut ainsi commander une fonction dans le serveur.

Les possibilités de commande avec les douze touches numériques d'un clavier téléphonique classique étant relativement limitées, il est souhaitable de pouvoir rajouter des touches à fonction évolutive sur un terminal de type SIP. Il serait alors nécessaire de prévoir des moyens pour afficher dynamiquement un mot, une abréviation de mot, ou une icône, sur un écran à proximité des touches à fonction évolutive, de façon à indiquer à l'utilisateur la fonction courante de chaque touche. En outre, il est souhaitable que ces indications soient affichées en exploitant le mieux possible les caractéristiques de l'écran.

Le procédé KPML n'a pas été conçu pour cela. Il ne sait détecter et transmettre que des commandes constituées d'un chiffre ou de quelques chiffres. Il ne peut donc pas afficher, sur un écran, un mot, une abréviation, ou une icône. En outre, le procédé KPML ne prend pas en compte les capacités d'affichage de l'écran du terminal, alors que divers modèles de terminaux peuvent être connectés à un même réseau : Le nombre de caractères affichables peut varier, mais aussi le type d'alphabet peut varier. L'écran peut avoir ou non des possibilités graphiques permettant d'afficher une icône.

On connaît des terminaux utilisant un procédé propre à un fabriquant, pour recevoir et afficher dynamiquement des indications sur un écran, à proximité des touches à fonction évolutive. Une application téléphonique demande à un serveur de présentation d'envoyer au terminal des données représentant des indications à afficher sur l'écran de ce terminal. Le serveur de présentation connaît à l'avance les caractéristiques de l'écran (Nombre de lignes et nombre de colonnes de pixels, nombre de couleurs affichables) et les caractéristiques des touches (Nombre de touches et disposition par rapport à l'écran) de chaque terminal du réseau auquel il est raccordé. Il adapte le format d'affichage des indications aux caractéristiques de l'écran et des touches du terminal auquel il doit envoyer des données. Le document US 2003/01013602 décrit un tel procédé pour afficher dynamiquement des indications sur l'écran d'un téléphone, à proximité des touches à fonction évolutive, pendant l'utilisation d'une messagerie vocale.

Un autre procédé connu consiste à envoyer, d'un serveur web à un terminal, des données représentant des indications à afficher sur l'écran de ce terminal, sous la forme d'une page web. Cette page est envoyée au moyen du protocole normalisé appelé HTTP (Hypertext Transfer Protocol) ou des évolutions équivalentes de ce protocole. Cette page est décrite au moyen du langage normalisé appelé HTML (High Level Markup Language). Si le terminal a des moyens de traitement et d'affichage suffisants, il peut comporter un navigateur web classique permettant d'afficher une telle page web.

Selon une premier mode de mise en oeuvre de ce procédé connu, il n'y a pas, à proprement parler, de touches à fonction évolutive. Elles sont remplacées par des liens hypertextes placés dans un texte, ou dans des menus déroulant, dans la page web affichée. L'utilisateur peut naviguer dans cette page avec un dispositif de pointage, et il clique sur un lien au lieu de presser une touche. Le serveur de communication n'a donc pas besoin de connaître les caractéristiques de touches pour chaque terminal.

Selon un second mode de mise en oeuvre de ce procédé connu, le terminal comporte des touches à fonction évolutive en bordure de l'écran, et une page web affichée sur l'écran donne des indications placées respectivement à proximité de chaque touche à fonction évolutive. Il est alors nécessaire que le serveur web connaisse à l'avance les caractéristiques des touches (Nombre de touches et disposition relative par rapport à l'écran) de chaque terminal du réseau auquel il est raccordé. Il adapte le format d'affichage des indications aux caractéristiques des touches du terminal auquel il doit envoyer des données.

Une page web n'est utilisable que sur des terminaux ayant une puissance de traitement et une capacité de mémoire suffisantes. Ceci exclut donc l'utilisation de terminaux SIP à faible coût.

D'autre part, ce procédé connu n'est pas parfaitement satisfaisant car la page web affichée doit être adaptée pour chaque appel, et doit pouvoir évoluer en cours d'appel, puisqu'elle contient des indications pour l'utilisation des touches à fonction évolutive, et que l'utilisateur peut sauter instantanément d'une communication à une autre, par exemple pendant un double appel. En pratique, le délai de création d'une nouvelle page web, et le délai de son traitement par le terminal permettent difficilement d'assurer la cohérence entre la page web affichée et la communication téléphonique en cours sur un terminal donné.

Le but de l'invention est de proposer un procédé de communication entre un serveur de communications et un terminal, qui permette d'afficher dynamiquement des indications sur l'écran d'un terminal, à proximité de touches à fonction évolutive, de façon à indiquer à l'utilisateur la fonction courante de chaque touche ; qui permette que ces indications soient affichées en exploitant le mieux possible les caractéristiques de l'écran ; et qui soit applicable sur un terminal SIP ayant une faible puissance de traitement et une faible capacité de mémoire.

L'objet de l'invention est un procédé de communication entre un serveur de communication et un terminal comportant au moins une touche à fonction évolutive et des moyens d'affichage apte à afficher à proximité de cette touche une indication concernant la fonction de cette touche ; comprenant les étapes consistant à :
- à indiquer à ce serveur quels types d'indication ce terminal est apte à afficher à proximité de cette touche ;
- et à envoyer, du serveur au terminal, des informations définissant au moins une commande KPLM que le serveur est capable de recevoir et qu'il est capable d'exécuter ;
et à envoyer, du serveur au terminal, des informations définissant au moins une indication associée à cette commande et devant être affichée sur le terminal, à proximité d'une touche à fonction évolutive en fonction de l'état téléphonique d'une communication active caractérisé en ce que les informations définissant au moins une indication associée à cette commande comportent les traductions d'une chaîne de caractères respectivement dans plusieurs langues, et en ce que le terminal sélectionne l'une de ces traductions en fonction de la langue affectée à ce terminal par l'utilisateur.

Le procédé ainsi caractérisé permet d'utiliser des touches à fonction évolutive sur tous les terminaux de type SIP comportant des moyens de traitement programmable, même si leur puissance de traitement et leur capacité de mémoire sont faibles, parce que l'étape consistant à envoyer du serveur au terminal, des informations définissant une indication associée à une commande KPLM implique beaucoup moins de traitement que la réception et le traitement d'une page web.

L'invention a aussi pour objet un terminal et un serveur pour la mise de ce procédé.

L'invention sera mieux comprise et d'autres caractéristiques apparaîtront à l'aide de la description ci-dessous et des figures l'accompagnant :
- La figure 1 représente un exemple de terminal téléphonique SIP comportant des touches à fonction évolutive.
- La figure 2 représente un exemple d'échange de messages de signalisation SIP entre cet exemple de terminal SIP et un serveur de communication, conformément au procédé selon l'invention.

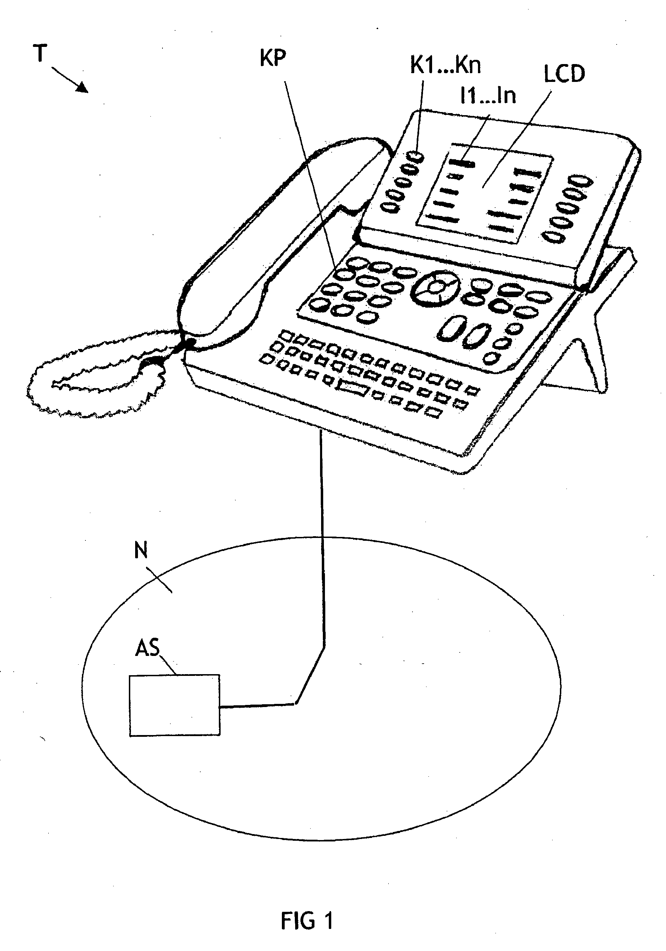

L'exemple de terminal téléphonique T représenté sur la figure 1 comporte un écran d'affichage LCD, à cristaux liquide, un clavier classique KP à douze touches 0-9, *, #, et des touches à fonction évolutive K1, ..., Kn le long de la bordure droite et le long de la bordure gauche de cet écran LCD. Le terminal T est relié à un réseau téléphonique N supportant la signalisation SIP et comportant un serveur de communication AS. Pendant toute la durée d'une communication, l'écran LCD affiche une indication, respectivement I1, ..., In, à proximité de chacune des touches à fonction évolutive, K1, ..., .Kn, pouvant être utilisée pendant la communication considérée ; par exemple pour mettre en garde une première communication afin d'établir une seconde communication. Chacune de ces indications peut être un mot, une chaîne de mots, ou une icône.

Le procédé selon l'invention est un perfectionnement au procédé connu KPLM. Ce procédé connu KPML utilise des requêtes du protocole de signalisation SIP, appelées SUBSCRIBE et NOTIFY, pour échanger des messages entre un serveur de communication et un terminal de type SIP lors de l'établissement de chaque communication. En utilisant ces messages KPML, le serveur indique au terminal un ensemble de commandes DTMF prédéterminées et associées à une communication donnée, qu'il est susceptible de recevoir, de la part d'un utilisateur. Chaque commande DTMF est constituée d'un appui sur une touche donnée, ou plusieurs touches données (parmi les touches 0 à 9, R, #, *, A, B, C, D). Si l'utilisateur applique une de ces commandes, le terminal doit détecter cette commande, et la signaler au serveur. Autrement dit, si le terminal détecte un appui sur une touche (ou une suite d'appuis de touche) correspondant à une commande qui a été indiquée à l'avance par le serveur, le terminal utilise des messages KPML pour lui signaler cet appui (ou cette suite d'appuis sur les touches données). Il commande ainsi une fonction dans le serveur.

Le procédé connu KPML ne prévoit que l'utilisation des touches 0 à 9, R, #, *, A, B, C, D, ayant une fonction respective fixe. Il ne prévoit rien pour permettre l'utilisation de touches supplémentaires à fonction évolutive ; en particulier, il ne permet pas d'afficher des icônes et/ou des chaînes de caractères à proximité de touches à fonction évolutive. Le procédé selon l'invention est un perfectionnement permettant d'utiliser des touches supplémentaires à fonction évolutive.

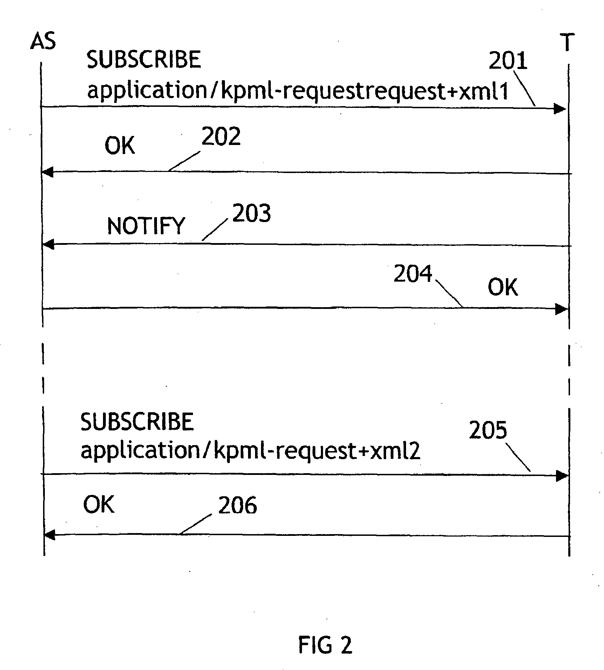

La figure 2 représente un exemple d'échange de messages de signalisation SIP entre un exemple de terminal T et un exemple de serveur de communication AS, conformément au procédé selon l'invention. Par hypothèse, le terminal T a été connecté à un réseau supportant la signalisation SIP, et au moment où il s'est enregistré auprès d'un serveur (appelé « Registrar ») dans ce réseau, le terminal T a indiqué ses capacités en envoyant à ce serveur les indications :
Accept-Language: en
Content-Type: image/jpeg
qui signifient respectivement que l'utilisateur du terminal T souhaite que les indications soient en Anglais, et que le terminal T peut afficher des icônes.

Au moment de l'établissement d'une communication donnée, les étapes de mise en oeuvre sont :
Etape 201 : le serveur de communication AS indique au terminal T toutes les actions possibles, c'est à dire la touche ou la suite de touches correspondant à chacune des commandes d'un ensemble de commandes prédéterminé et associé à l'état de la communication en cours. Pour cela, il envoie un message SIP appelé SUBSCRIBE au terminal T. Ce message a pour effet d'abonner ce serveur auprès du terminal T, pour qu'il soit informé de certaines actions quand elles sont détectées par le terminal T. Ce message SUBSCRIBE contient :
   - L'identité de l'application demandeuse : application/kplm-request.
   - Un document en langage XML (Extensible Markup Language). Ce document, appelé xml1 dans cet exemple, décrit un ensemble prédéterminé de commandes, et un ensembles d'indications destinées à l'utilisateur, chaque commande étant respectivement associée à une indication.

Chaque commande de cet ensemble est décrite comme une commande DTMF du procédé KPLM classique, c'est à dire est décrite comme un appui ou une suite d'appuis sur des touches désignées par les caractères 0 à 9, R, #, *, A, B, C, D. Par exemple une commande est décrite par « 013 », c'est à dire un appui sur la touche à fonction fixe « 0 », puis un appui sur la touche à fonction fixe « 1 », puis un appui sur la touche à fonction fixe « 3 ». Si le terminal n'a aucune touche à fonction évolutive, il peut exploiter ces commandes de manière classique : l'usager doit se rappeler qu'il faut appuyer successivement sur les touches (à fonction fixe) 0, 1, 3, du clavier classique pour réaliser cette commande.

Si le terminal comporte des touches à fonction évolutive, et un logiciel de mise en oeuvre du procédé selon l'invention, ce terminal décide de manière autonome que la touche à fonction évolutive « Ki » commandera cette fonction. Quand il détectera un appui sur la touche « Ki », le terminal émettra des signaux DTMF identiques à ceux habituellement produits par une suite d'appuis sur les touches à fonction fixe « 0 », « 1 », « 3 ». D'autre part, le terminal affiche, à proximité de la touche Ki (dont il connaît l'emplacement), l'indication associée à cette commande, par exemple la chaîne de caractères « DEMANDER UN RAPPEL ». Ainsi l'utilisateur n'a pas besoin de se rappeler ni de la suite 0, 1, 3, ni de l'emplacement de la touche « Ki». Il est à noter que le terminal permet encore d'utiliser la suite d'appuis 0,1,3, si l'usager veut tout de même l'utiliser.

**Etape 202 :** Le terminal T accuse réception en envoyant au serveur AS un message SIP appelé OK, et il mémorise cet ensemble de commandes et cet ensemble d'indications pour la durée de la communication ou de l'état courant de la communication considérée, sauf si un nouvel ensemble de commandes et un nouvel ensemble d'indications viennent les remplacer au cours de cette communication.

**Etape 203 :** L'utilisateur appuie sur une touche, ou une suite de touches, correspondant à l'une des commandes possibles. Le terminal T détecte qu'un utilisateur a appuyé sur la touche ou la suite de touches correspondant à une des commandes de l'ensemble de commandes prédéterminé et associé à l'état courant de la communication en cours. Il envoie au serveur AS un message SIP appelé NOTIFY, contenant l'identité de la commande.

**Etape 204 :** Le serveur AS accuse réception en envoyant un message OK au terminal T. Il va ensuite appliquer le traitement correspondant à cette commande.

**Etape 205 :** Ultérieurement, suite à un événement au cours de cette même communication, le serveur AS indique au terminal T toutes les actions désormais possibles, compte tenu de cet événement. Pour cela, il envoie un nouveau message SUBSCRIBE au terminal T. Ce message SUBSCRIBE contient :
- L'identité de l'application demandeuse : apptication/kptm-request.
- Un nouveau document en langage XML (Extensible Markup Language). Ce document, appelé xml2 dans cet exemple, décrit un nouvel ensemble prédéterminé de commandes, et un nouvel ensemble d'indications associées respectivement.

**Etape 206 :** Le terminal T accuse réception en envoyant au serveur AS un message OK, et il mémorise ce nouvel ensemble de commandes et ce nouvel ensemble d'indications à la place des précédents.

Pour transmettre des données permettant d'afficher une indication à proximité de chaque touche à fonction évolutive, deux modes de réalisation préférentiels sont proposés.

Selon un premier mode de réalisation, les indications sont constituées de chaînes de caractères en langage naturel. Cela suppose que le serveur connaisse les capacités d'affichage du terminal, pour savoir s'il accepte les caractères latins, ou les idéogrammes chinois par exemple. Plusieurs procédés classiques sont utilisables. Par exemple, le terminal peut lui signaler dynamiquement ses capacités d'affichage lors de l'envoi du message REGISTER envoyé vers son « Registrar » (non représenté sur les figures). Le serveur de communication supervise le « Registrar » pour être notifié de l'apparition d'un poste sur le réseau.

Selon un autre exemple de réalisation, le terminal informe le serveur de communication lorsqu'il lui envoie un message OK, à l'étape 202, en utilisant les champs d'en-tête de ce message OK : ACCEPT-LANGUAGE, ACCEPT

Exemple de fragment de message KPML, avec des indications en langage naturel:

```
 SUBSCRIBE sip:43045@subA.example.com SIP/2.0
 Via: SIP/2.0/TCP client.example.com;branch=3qo3j0ouq
 From: <sip:AS@example.com>;tag=978675
 To: <sip:43045@example.com>
 Call-ID: 12345601@subA.example.com
 CSeq: 21 SUBSCRIBE
 Contact: <sip:AS@client. example.com>
 Max-Forwards: 70
 Event: kpml ;remote-tag="<sip:phn@example.com;tag=jfi23>" ;local-
 tag="sip:gw@subA.example.com;tag=oi43jfq" ;call-
 id="12345598@subA.example.com" Expires: 7200
 Accept: application/kpml-response+xml
 Content-Type: application/kpml-request+xml
 Content-Length: 295
 <?xml version="1.0" encoding="UTF-8"?>
 <kpml-request xmlns="urn:ietf:params:xml:ns:kpmt-request"
 xmlns:xsi="http://www.w3.org/2001 /XMLSchema-instance" xsi:schemaLocation=
 "urn:ietf:params:xml:ns:kpml-request kpml-request.xsd" version="1.0">
               <pattern>
                      <regex display="DIS00" state="early">0</regex>
                      <regex display="DIS01" state="all">011 </regex>
                       <regex display="DIS02" state="confirmed" >012</regex>
                      <regex display="DIS03" state="focus" >013</regex>
               </pattern>
 <display id="DIS00" lang="en">Override routing</display>
 <display id="DIS00" lang="fr">Passer outre le routage</display>
 <display id="DIS01" lang="en">Report unsolicited call</display>
 <display id="DIS01" lang="fr">Signaler un appel malveillant</display>
```

Dans cet exemple, la ligne : <regex display="DIS00" state="early">0</regex> renvoie à 2 autres lignes correspondant chacune à l'affichage en langage naturel dans une langue donnée :
<display id="DIS00" lang="en">Override routing</display>
<display id="DIS00" lang="fr">Passer outre le routage</display>

Le terminal affichera l'indication correspondant à l'une de ces deux lignes, selon la langue que l'utilisateur a affectée au terminal T. Si, par exemple, l'utilisateur a affecté la langue française, le terminal affiche l'indication correspondant à :
<display id="DIS00" lang="fr">Passer outre le routage</display>

Dans l'exemple de fragment de message KPML ci-dessus :
- La ligne : <regex display="DIS00" , state="early">0</regex> associe une commande : <regex display="DIS00" , state="early"> à un appui sur la touche « 0 ».
   Quand le terminal reçoit cette ligne, il doit afficher une indication appelée DIS00, qui est une chaîne de caractères, si l'état de la communication téléphonique est : Sonnerie (« early » dans la terminologie SIP).
- La ligne : <regex display="DIS01" , state="all">011 </regex> associe une commande : <regex display="DIS01", state="all"> à un appui sur la touche « 0 » suivi immédiatement d'un appui sur la touche « 1 ». Quand le terminal reçoit cette ligne, il doit afficher une indication appelée DIS01, qui est une chaîne de caractères, quel que soit l'état de la communication téléphonique.
   <display id="DIS00" lang="en">Override routing</disptay>
- La ligne : <regex display="DIS02", state="confirmed" >012</regex> associe une commande : <regex disptay="DIS02", state="confirmed"> à un appui sur la touche « 0 », suivi d'un appui sur la touche « 1 » et d'un appui sur la touche « 2 ».

Quand le terminal reçoit cette ligne, il doit afficher une indication appelée DIS02, qui est une chaîne de caractères, si l'état de la communication téléphonique est : Conversation (« confirmed » dans la terminologie SIP).

Les états de la communication téléphonique peuvent être par exemple :
Sonnerie : « early »,
Repos : « terminated »
Conversation avec un correspondant : « confirmed »
En garde : « inactive »
En conférence : « focus »
Etc...

Selon un second mode de réalisation, une indication est constituée d'une icône et d'une chaîne de caractères en langage naturel.

En vue d'afficher des indications en langage naturel et des icônes, l'exemple précédent de fragment de message KPML comporte une information supplémentaire:
<display id="DIS00" Lang="en"
   img="http://www.example.com/images/ovrd.jpg">Override routing</display>
<display id="DIS00" lang="fr"
   img="http://www.example.com/images/ovrd.jpg">Passer outre le routage</display>

Cette information supplémentaire correspond au fait que l'indication à afficher comporte à la fois :
- une icône qui est disponible à l'adresse : img=http://www.example.com/images/ovrd.jpg
- et une chaîne de caractères qui est « Passer outre le routage ».

Selon une variante de réalisation, Les informations définissant au moins une indication associée à cette commande sont un mot clé, et le terminal consulte un document tiers pour traduire ce mot clé en une indication compréhensible par l'utilisateur, seule une adresse URL (Universal Resource Locator ou Adresse Universelle de Ressource) de ce document tiers étant envoyée du serveur au terminal. Par exemple, ce document tiers est un dictionnaire de traduction. Le dictionnaire utilisé est téléchargé par le terminal depuis l'adresse URL fournie dans une extension du message KPML. Puis le terminal utilise ce dictionnaire pour traduire les mots clés reçus du serveur.

Dans l'exemple de fragment de message KPML ci-dessus :

```
       <pattern>
               <regex display="DIS00" cid="1" state="early">0</regex>
               <regex display="DIS01" cid="1" state="all">011 </regex>
               <regex display="DIS02" cid="1" state="confirmed" >012</regex>
               <<regex display="DIS03" cid="1" state="focus" >013</<regex>
               < /pattern>
 <cid id="1" version="03">http://www.example.net/phonedisplay</dict>
```

l'attribut cid (content-indirection) indique l'URL :
http://www.example.net/phonedisplay</dict>
du dictionnaire dans lequel chercher les index DIS00, DIS01, etc.

L'avantage de cette méthode est de ne télécharger qu'une fois le dictionnaire (lorsque la version du dictionnaire reste constante) et donc de diminuer la taille des messages KPML.

Le procédé selon l'invention est facilement adaptable, par un homme de l'Art, pour un terminal comportant un écran tactile ou des menus déroutants plutôt que des touches classiques.

## Revendications

1. Procédé de communication entre un serveur de communication (AS) et un terminal (T) comportant au moins une touche à fonction évolutive (K1, ..., Kn) et des moyens d'affichage (LCD) apte à afficher à proximité de cette touche une indication concernant la fonction de cette touche ; comprenant les étapes consistant à :
- à indiquer à ce serveur quels types d'indication ce terminal est apte à afficher à proximité de cette touche ;
- à envoyer (201), du serveur au terminal, des informations définissant au moins une commande en langage appelé Key Press Markup Language, cette commande utilisant une requête du protocole de signalisation appelé Session Initiation Protocol, le serveur étant capable de recevoir cette commande et de l'exécuter ;
- et envoyer (201), du serveur au terminal, des informations définissant au moins une indication associée à cette commande et devant être affichée sur le terminal, à proximité d'une touche à fonction évolutive en fonction de l'état téléphonique d'une communication active ;
**caractérisé en ce que** les informations définissant au moins une indication associée à cette commande comportent les traductions d'une chaîne de caractères respectivement dans plusieurs langues, et **en ce que** le terminal sélectionne l'une de ces traductions en fonction de la langue affectée à ce terminal par un utilisateur.

2. Procédé selon la revendication 1, **caractérisé en ce que** les informations définissant au moins une indication associée à cette commande comportent une image.

3. Procédé selon la revendication 1, **caractérisé en ce que** les informations définissant au moins une indication associée à cette commande sont un mot clé, et **en ce que** le terminal consulte un document tiers pour traduire ce mot clé en une indication compréhensible par l'utilisateur, seule l'adresse de ce document tiers étant envoyée du serveur au terminal.

4. Terminal téléphonique (T) comportant :
- au moins une touche à fonction évolutive (K1, ..., Kn),
- des moyens d'affichage (LCD) apte à afficher à proximité de cette touche une indication concernant une commande activable par cette touche,
- des moyens pour recevoir (201) des informations définissant au moins une commande en langage appelé Key Press Markup Language, cette commande utilisant une requête du protocole de signalisation appelé Session Initiation Protocol et pouvant être émise vers un serveur, et une indication associée à cette commande, et devant être affichée sur le terminal, à proximité d'une touche à fonction évolutive ;
**caractérisé en ce que** les moyens pour recevoir (201) des informations comportent des moyens pour recevoir des traductions d'une chaîne de caractères respectivement dans plusieurs langues, et pour sélectionner l'une de ces traductions en fonction de la langue affectée à ce terminal par un utilisateur.

5. Terminal selon la revendication 4, **caractérisé en ce que** les moyens pour recevoir (201) des informations comportent des moyens pour recevoir une image.

6. Terminal selon la revendication 4, **caractérisé en ce que** les moyens pour recevoir (201) des informations comportent des moyens pour recevoir l'adresse d'un document tiers.

7. Serveur de communication (AS) comportant des moyens pour :
- recevoir (203) des informations indiquant à ce serveur quels types d'indication un terminal (T) est apte à afficher à proximité d'une touche à fonction évolutive ;
- envoyer (201) audit terminal, des informations définissant au moins une commande KPLM en langage appelé Key Press Markup Language, cette commande utilisant une requête du protocole de signalisation appelé Session Initiation Protocol, le serveur étant capable de recevoir cette commande et de l'exécuter ;
- et pour envoyer (201) audit terminal des informations définissant au moins une indication associée à cette commande et devant être affichée sur le terminal, à proximité d'une touche à fonction évolutive ;
**caractérisé en ce qu'**il comporte outre moyens pour envoyer des traductions d'une chaîne de caractères respectivement dans plusieurs langues.

8. Moyen de stockage sur lequel est enregistré un programme, ce programme comportant des instructions qui, lorsqu'elles sont exécutées dans un terminal, consistent à recevoir (201) des informations définissant au moins une indication associée à une commande en langage appelé Key Press Markup Language, cette commande utilisant une requête du protocole de signalisation appelé Session Initiation Protocol et devant être affichée sur un terminal, à proximité d'une touche à fonction évolutive ; **caractérisé en ce que** ce programme comporte des instructions qui, lorsqu'elles sont exécutées dans un terminal, consistent à recevoir des informations comportant les traductions d'une chaîne de caractères respectivement dans plusieurs langues, et des instructions qui, lorsqu'elles sont exécutées dans un terminal, consistent sélectionner l'une de ces traductions en fonction de la langue affectée à ce terminal par un utilisateur.

9. Moyen de stockage sur lequel est enregistré un programme, ce programme comportant des instructions qui, lorsqu'elles sont exécutées dans un serveur, consistent à envoyer (201) à un terminal des informations définissant au moins une indication associée à une commande en langage appelé Key Press Markup Language, cette commande utilisant une requête du protocole de signalisation appelé Session Initiation Protocol, et devant être affichée sur ce terminal, à proximité d'une touche à fonction évolutive ; **caractérisé en ce que** ces instructions consistent en outre à envoyer des traductions d'une chaîne de caractères respectivement dans plusieurs langues.

## Patentansprüche

1. Verfahren zur Kommunikation zwischen einem Kommunikationsserver (AS) und einem Endgerät (T) mit mindestens einer evolutiven Funktionstaste (K1, ..., Kn) und Anzeigemitteln (LCD), die fähig sind, in der Nähe dieser Taste eine Angabe in Bezug auf die Funktion dieser Taste anzuzeigen; umfassend Schritte, die darin bestehen,
- diesem Server anzugeben, welche Arten der Angabe dieses Endgerät fähig ist, in der Nähe dieser Taste anzuzeigen;
- Informationen, welche mindestens einen Befehl in der sogenannten Tastendruck-Auszeichnungssprache definieren, vom Server an das Endgerät zu senden (201), wobei dieser Befehl eine Anforderung des Signalisierungsprotokolls, Sitzungsinitiationsprotokoll genannt, verwendet, wobei der Server fähig ist, diesen Befehl zu empfangen und auszuführen;
- und Informationen, welche mindestens eine mit diesem Befehl assoziierte und am Endgerät in der Nähe einer evolutiven Funktionstaste in Abhängigkeit von dem telefonischen Status einer aktiven Verbindung anzuzeigende Angabe definieren, vom Server an das Endgerät zu senden (201);
**dadurch gekennzeichnet, dass** die Informationen, welche mindestens eine mit diesem Befehl assoziierte Angabe definieren, jeweils die Übersetzungen einer Zeichenkette in mehreren Sprachen umfassen, und dass das Endgerät gemäß der diesem Endgerät vom Benutzer zugeordneten Sprache eine dieser Übersetzungen auswählt.

2. Verfahren nach Anspruch 1, **dadurch gekennzeichnet, dass** die Informationen, welche mindestens eine mit diesem Befehl assoziierte Angabe definieren, ein Bild umfassen.

3. Verfahren nach Anspruch 1, **dadurch gekennzeichnet, dass** die Informationen, welche mindestens eine mit diesem Befehl assoziierte Angabe definieren, ein Schlüsselwort sind, und dass das Endgerät ein drittes Dokument einsieht, um dieses Schlüsselwort in eine für den Benutzer verständliche Angabe zu übersetzen, wobei lediglich die Adresse dieses Dokuments vom Server an das Endgerät gesendet wird.

4. Telefonendgerät (T), umfassend:
- mindestens eine evolutive Funktionstaste (K1, ..., Kn),
- Anzeigemittel (LCD), welche fähig sind, in der Nähe dieser Taste eine Angabe über einen anhand dieser Taste aktivierbaren Befehl anzuzeigen,
- Mittel zum Empfangen (201) von Informationen, welche mindestens einen Befehl in der sogenannten Tastendruck-Auszeichnungssprache definieren, wobei dieser Befehl eine Anforderung des Signalisierungsprotokolls, Sitzungsinitiationsprotokoll genannt, welches an einen Server ausgegeben werden kann, und eine mit diesem Befehl assoziierte Angabe, welche in der Nähe einer evolutiven Funktionstaste auf dem Endgerät anzuzeigen ist, verwendet;
**dadurch gekennzeichnet, dass** die Mittel zum Empfangen (201) von Informationen Mittel zum Empfangen von Übersetzungen jeweils einer Zeichenkette in mehreren Sprachen und zum Auswählen einer dieser Übersetzungen gemäß der diesem Endgerät von einem Benutzer zugeordneten Sprache umfassen.

5. Endgerät nach Anspruch 4, **dadurch gekennzeichnet, dass** die Mittel zum Empfangen (201) von Informationen Mittel zum Empfangen eines Bildes aufweisen.

6. Endgerät nach Anspruch 4, **dadurch gekennzeichnet, dass** die Mittel zum Empfangen (201) von Informationen Mittel zum Empfangen der Adresse eines dritten Dokuments aufweisen.

7. Kommunikationsserver (AS) mit Mitteln zum:
- Empfangen (203) von Informationen, die diesem Server angeben, welche Angabearten ein Endgerät (T) fähig ist, in der Nähe einer evolutiven Funktionstaste anzuzeigen;
- Senden (201) von Informationen, welche mindestens einen KPLM-Befehl in der sogenannten Tastendruck-Auszeichnungssprache definieren, an das besagte Endgerät, wobei dieser Befehl eine Anforderung des Signalisierungsprotokolls, Sitzungsinitiationsprotokoll genannt, verwendet, wobei der Server fähig ist, diesen Befehl zu empfangen und auszuführen;
- und zum Senden (201) von Informationen, welche mindestens eine mit diesem Befehl assoziierte und in der Nähe einer evolutiven Funktionstaste anzuzeigende Angabe definieren, an das besagte Endgerät;
**dadurch gekennzeichnet, dass** er weiterhin Mittel zum Senden von Übersetzungen jeweils einer Zeichenkette in mehreren Sprachen umfasst.

8. Speichermittel, auf welchem ein Programm aufgezeichnet ist, wobei dieses Programm Befehle enthält, welche, wenn sie in einem Endgerät ausgeführt werden, darin bestehen, Informationen, die mindestens eine mit einem Befehl assoziierte Angabe in der sogenannten Tastendruck-Auszeichnungssprache definieren, zu empfangen (201), wobei dieser Befehl eine Anforderung des Signalisierungsprotokolls, Sitzungsinitiationsprotokoll genannt, verwendet und auf einem Endgerät in der Nähe einer evolutiven Funktionstaste anzuzeigen ist; **dadurch gekennzeichnet, dass** dieses Programm Befehle, welche, wenn sie in einem Endgerät ausgeführt werden, darin bestehen, Informationen mit den jeweiligen Übersetzungen einer Zeichenkette in mehreren Sprachen zu empfangen, und Befehle, welche, wenn sie in einem Endgerät ausgeführt werden, darin bestehen, eine dieser Übersetzungen gemäß der diesem Endgerät von einem Benutzer zugeordneten Sprache auszuwählen, enthält.

9. Speichermittel, auf welchem ein Programm aufgezeichnet ist, wobei dieses Programm Befehle enthält, welche, wenn sie in einem Endgerät ausgeführt werden, darin bestehen, Informationen, die mindestens eine mit einem Befehl assoziierte Angabe in der sogenannten Tastendruck-Auszeichnungssprache definieren, zu empfangen (201), wobei dieser Befehl eine Anforderung des Signalisierungsprotokolls, Sitzungsinitiationsprotokoll genannt, verwendet und auf diesem Endgerät in der Nähe einer evolutiven Funktionstaste anzuzeigen ist; **dadurch gekennzeichnet, dass** diese Befehle weiterhin darin bestehen, jeweils Übersetzungen einer Zeichenkette in mehreren Sprachen zu senden.

## Claims

1. A method for communicating between a communication server (AS) and a terminal (T) comprising at least one multifunction key (K1, ..., Kn) and display means (LCD) capable of displaying near that key an indication regarding the function of that key; comprising the steps consisting of:
- indicating to that server which types of indicators that terminal is capable of displaying near that key;
- sending (201), from the server to the terminal, information defining at least one command in a language called Key Press Markup Language, that command using a request of the signaling protocol called Session Initiation Protocol, the server being capable of receiving that command and executing it;
- and sending (201), from the server to the terminal, information defining at least one indication associated with that command and that must be displayed on the terminal, near a multifunction key based on the telephone status of an active call;
**characterized in that** the information defining at least one indication associated with that command comprises translations of a character string respectively into multiple languages, and **in that** the terminal selects one of those translations based on the language assigned to that terminal by a user.

2. A method according to claim 1, **characterized in that** the information defining at least one indication associated with that command comprises an image.

3. A method according to claim 1, **characterized in that** the information defining at least one indication associated with that command is a keyword, and **in that** the terminal consults a third-party document to translate that keyword into an indication that the user can understand, only the address of that third-party document being sent from the server to the terminal.

4. A telephone terminal (T) comprising:
- at least one multifunction key (K1, ..., Kn),
- display means (LCD) capable of displaying near that key an indication regarding a command that can be activated by that key,
- means for receiving (201) information defining at least one command in a language called Key Press Markup Language, that command using a request of the signaling protocol called Session Initiation Protocol and being transmittable to a server, and an indication associated with that command and which is to be displayed on the terminal, near a multifunction key;
**characterized in that** the means for receiving (201) information comprise means for receiving translations of a character string respectively in multiple languages, and to select one of those translations based on the language assigned to that terminal by a user.

5. A terminal according to claim 4, **characterized in that** the means for receiving (201) information comprise means for receiving an image.

6. A terminal according to claim 4, **characterized in that** the means for receiving (201) information comprise means for receiving the address of a third-part document.

7. A communication server (AS) comprising means for:
- receiving (203) information indicating to that server what types of indications a terminal (T) is capable of displaying near a multifunction key;
- sending (201) said terminal information defining at least one KPML command in a language called Key Press Markup Language, that command using a request of the signaling protocol called Session Initiation Protocol, the server being capable of receiving that command and executing it;
- and sending (201) said terminal information defining at least one indication associated with that command and needing to be displayed on the terminal, near a multifunction key;
**characterized in that** it further comprises means for sending translations of a character string respectively in multiple languages.

8. Storage means wherein a program is saved, that program comprising instructions which, when executed within a terminal, consist of receiving (201) information defining at least one indication associated with a command in a language called Key Press Markup Language, that command using a request of the signaling protocol called Session Initiation Protocol and needing to be displayed on a terminal, near a multifunction key; **characterized in that** the program comprises instructions which, when they are executed in a terminal, consist of receiving information comprising translations of a character string respectively in multiple languages, and instructions that, when executed within a terminal, consist of selecting one of the translations based on the language assigned to that terminal by a user.

9. Storage means wherein a program is saved, that program comprising instructions which, when executed within a terminal, consist of sending (201) a terminal information defining at least one indication associated with a command in a language called Key Press Markup Language, that command using a request of the signaling protocol called Session Initiation Protocol and needing to be displayed on that terminal, near a multifunction key; **characterized in that** those instructions further consist of sending translations of a character string respectively in multiple languages.
